# DEMANDE DE BREVET EUROPEEN

(11) **EP 2 716 966 A1**
(43) Date de publication de la demande: **09.04.2014**
(21) Numéro de dépôt: 13187233.5
(22) Date de dépôt: 03.10.2013
(51) Int. Cl.: F21V 8/00, F21S 8/10

(54) **Module d'éclairage et/ou de signalisation pour véhicule comprenant un guide de lumière avec une nervure et un support avec des moyens de fixation coopérant avec la nervure**

(30) Priorité: 04.10.2012 FR 1259422
(71) Demandeur: VALEO ILUMINACION,, 23600 Martos (ES)
(72) Inventeur: Gomez, Manuel, 23006 JAEN (ES)

(57) **Abrégé**

L'invention a trait à un module d'éclairage et/ou de signalisation comprenant un support 8, un guide de lumière 12 disposé dans un logement dudit support 8 et un cache 10 disposé sur le support et s'étendant devant le guide de lumière 12. Le guide de lumière 12 comprend une nervure 14 longitudinale destinée à coopérer par engagement avec une série de crochets 16 du support. Le cache 10 est destiné à cacher les zones de montage du guide de lumière 12. Il comprend une ou plusieurs fenêtres 24 destinées à laisser passer les rayons lumineux émis transversalement par le guide de lumière 12. La nervure 14 s'étend de manière continue sur essentiellement toute la longueur de chacune de fenêtres 24. La nervure 14 permet d'assurer une fixation simple, rapide et sûre du guide de lumière à son support. La continuité de la nervure 14 le long de chacune des fenêtres 24 évite de générer au travers desdites fenêtres toute inhomogénéité visible.

## Description

L'invention a trait à un guide de lumière pour module d'éclairage et/ou de signalisation notamment pour véhicule. L'invention a trait également à un support pour un tel guide de lumière. L'invention a trait également à un module d'éclairage et/ou de signalisation comprenant un tel support et éventuellement un tel guide disposé sur ledit support.

Dans le domaine de l'éclairage et de la signalisation de véhicules automobiles, il est de plus en plus fréquent d'utiliser des guides optiques. Un guide optique est, très schématiquement, un élément allongé de matière transparente, généralement sous forme d'un cylindre. A proximité de l'une des extrémités du guide, appelée face d'entrée du guide, est disposée une (ou plusieurs) source lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes formant des facettes réfléchissantes. Le guide émet ainsi de la lumière sur toute sa longueur. Il présente l'avantage de pouvoir prendre des formes géométriques très variées, être rectiligne ou en arc de cercle, et amener une surface éclairante même dans des zones peu accessibles du projecteur ou du feu du véhicule. Il participe ainsi fortement au style du projecteur ou du feu. En fonction de la forme générale du guide ou encore de sa longueur, sa fixation au projecteur ou feu du véhicule peut s'avérer difficile à réaliser, notamment sous la contrainte d'assurer un aspect homogène du guide sur toute sa longueur visible.

Le document de brevet DE 10 2007 010 023 A1 divulgue un dispositif de signalisation du type clignotant destiné à être intégré dans un rétroviseur extérieur d'un véhicule. Il comprend un guide de lumière consistant en deux éléments allongés selon deux directions longitudinales parallèles et reliés entre eux par une partie centrale s'étendant le long des éléments. Des ergots de fixation du guide à un support sont prévus à une de ses deux extrémités. Le support comprend deux logements longitudinaux parallèles et de section généralement en U. Chaque élément longitudinal du guide est reçu dans un de ces logements. Le guide est ainsi maintenu uniquement par ses deux extrémités, les deux éléments longitudinaux parallèles étant maintenus dans leurs logements respectifs avec leur surface extérieure à distance de la surface du logement. Ce mode de fixation du guide de lumière est praticable pour des guides de courte longueur, et en particulier pour des guides multiples de rigidité accrue. En effet, pour des guides de lumière simples, une telle fixation risque de poser problème notamment un problème de contact de la surface du guide avec celle du logement de manière non contrôlée.

Le document de brevet US 2005/0254253 A1 divulgue un projecteur de véhicule équipé de deux modules de signalisation circulaires entourant chacun un module d'éclairage. Chacun de ces modules de signalisation comprend un guide de lumière longitudinal de forme généralement circulaire. Il est reçu dans un logement également circulaire et comprenant des encoches destinées à coopérer avec des pattes de fixation s'étendant vers l'arrière depuis la face arrière du guide. Ces pattes sont généralement flexibles et pourvues d'une surface à contact positif apte à coopérer avec le bord de l'encoche correspondante du support. Le logement est généralement circulaire et de section généralement rectangulaire ouverte de manière à pouvoir recevoir le guide de lumière dont la section correspondante est également approximativement rectangulaire. Le fond du logement comprend une série d'ouvertures destinées à laisser passer les rayons lumineux émis par la source lumineuse disposée en arrière dudit guide de lumière. Ce module est assez intéressant du point de vue de la simplicité de construction. Les pattes de fixation influencent cependant la transmission de lumière. Cet effet n'est pas excessivement gênant dans la configuration du module qui y est décrit en raison du fait que le logement comprend quatre ouvertures d'alimentation du guide en lumière répartis sur sa circonférence. Les inhomogénéités causées par les pattes de fixation sont ainsi réduites. Dans le cadre d'un guide de lumière alimenté uniquement par une de ses extrémités, voire par les deux, cette solution génère des inhomogénéités posant problème. De plus, ce type de montage impose un contact entre la face arrière du guide avec la surface du logement. La section rectangulaire du guide et du logement constituent également une limitation qui peut s'avérer pénalisante pour d'autres applications.

L'objectif de la présente invention consiste à proposer un guide de lumière et un support correspondant qui pallie au moins un des inconvénients sus mentionnés. Plus particulièrement, l'objectif de la présente invention consiste à proposer un guide de lumière et un support correspondant qui permettent une fixation satisfaisante du guide et assurent une homogénéité d'éclairage satisfaisante le long du guide.

L'invention a pour objet un guide optique de lumière avec une direction longitudinale et une section transversale formant un contour général fermé, le guide optique étant en matériau transparent apte à former un dioptre avec son environnement et apte à transmettre et guider des rayons lumineux par réflexions multiples sur le dioptre, le guide optique comprenant un tronçon visible avec des moyens aptes à réfléchir transversalement une partie des rayons le parcourant de manière à les faire sortir du guide; remarquable en ce que le guide optique comprend une nervure longitudinale continue sur le tronçon visible du guide, faisant saillie du contour général, la nervure étant destinée à coopérer avec un support en vue de la fixation du guide optique au support.

Le guide peut comprendre une pluralité de nervures, comme par exemple plusieurs nervures alignées selon une même direction longitudinale et/ou plusieurs nervures réparties sur le pourtour de la section du guide optique.

Préférentiellement le contour général de la section du guide optique présente une concavité constante sur tout le contour. Le contour général fait abstraction de la nervure.

Selon un mode avantageux de l'invention, les moyens aptes à réfléchir transversalement une partie des rayons comprennent une succession de facettes réfléchissantes réparties longitudinalement sur une partie arrière de la surface du tronçon visible du guide optique, lesdits moyens étant aptes à réfléchir une partie des rayons lumineux parcourant le guide de manière à les faire sortir du guide optique au travers d'une partie avant de ladite surface, la nervure étant positionnée sur le contour général du guide optique de manière à être entre la partie arrière et la partie arrière de ladite surface, préférentiellement approximativement à mi chemin entre ces deux zones. La nervure est ainsi idéalement positionnée de manière à perturber le moins possible les jeux de réflexions au sein du guide optique.

Selon un autre mode avantageux de l'invention, la nervure présente une section générale de quadrilatère, préférentiellement de rectangle dont la largeur et la hauteur sont inférieurs à 10%, préférentiellement 5%, plus préférentiellement encore 3% de la dimension moyenne de la section de l'élément. La section notamment en quadrilatère peut présenter des arêtes arrondies.

Selon un encore autre mode avantageux de l'invention, la nervure est formée intégralement avec le guide optique, préférentiellement par moulage.

L'invention a également pour objet un support pour guide optique de lumière d'un dispositif d'éclairage et/ou de signalisation, comprenant un logement longitudinal apte à recevoir le guide optique, **caractérisé en ce que** le guide optique est conforme à l'invention et le support comprend des moyens de retenue du guide optique dans le logement apte à coopérer avec la nervure dudit guide.

Selon un mode avantageux de l'invention, les moyens de retenue comprennent au moins une surface de contact positif avec la nervure apte à retenir le guide optique dans le logement.

Selon un autre mode avantageux de l'invention, les moyens de retenue comprennent au moins un bras préférentiellement flexible supportant la surface de contact positif. Préférentiellement, le support comprend une série de bras répartis préférentiellement de manière homogène le long de la direction longitudinale du logement.

Selon une réalisation de l'invention, le bras ou chaque bras comprend un crochet et une zone flexible apte à permettre un déplacement du crochet lors de l'insertion du guide dans son logement, chaque crochet comprenant une surface d'accrochage avec la nervure du guide de lumière. Selon une réalisation de l'invention, cette surface peut être généralement perpendiculaire à la direction d'ouverture du logement qui correspond essentiellement à la direction d'insertion du guide dans ledit logement. Cette surface forme ainsi une surface à contact positif avec la surface avant de la nervure du guide.

Selon un encore autre mode avantageux de l'invention, au moins un bras comprend une surface de contact avec la nervure du guide lors de son insertion dans le logement, ladite surface étant inclinée par rapport à une direction générale d'insertion du guide de manière à permettre le déplacement du bras lors de l'insertion du guide dans le logement en vue de l'engagement de la surface à contact positif avec la nervure. Dans les modes de réalisation où le bras comprend un crochet, c'est ce crochet qui comprend la surface de contact inclinée, permettant ainsi d'insérer plus avant le guide, jusqu'à ce que la surface inclinée quitte la surface de la nervure et que la surface de contact vienne se placer devant la surface avant de la nervure, assurant ainsi une retenue du guide dans son logement.

Selon un encore autre mode avantageux de l'invention, le logement comprend au moins une surface de soutien du guide, ladite surface de soutien étant généralement opposée aux moyens de retenue du guide. Préférentiellement, le logement comprend une pluralité de surfaces de soutien réparties, préférentiellement de manière homogène, le long de la direction longitudinale du logement.

Selon un mode de réalisation, les bras flexibles et les crochets exercent un effort sur le guide dirigé vers les surfaces de soutien. Cet effort élastique permet d'assurer un maintien optimal du guide dans son logement.

Selon un encore autre mode avantageux de l'invention, la surface de soutien du guide forme une arête orientée généralement perpendiculairement à la direction longitudinale du guide.

Selon un encore autre mode avantageux de l'invention, le logement comprend une section généralement en U dont l'ouverture correspond à une direction d'insertion du guide de lumière dans ledit logement.

Selon un encore autre mode avantageux de l'invention, le logement comprend au moins une surface d'appui du guide, ladite surface d'appui étant généralement disposée dans le fond du logement selon la direction d'insertion, ladite surface formant préférentiellement une nervure dans un plan généralement perpendiculaire à la direction longitudinale du guide. Préférentiellement, le logement comprend une pluralité de surfaces d'appui réparties, préférentiellement de manière homogène, le long de la direction longitudinale du logement.

Selon des réalisations de l'invention, l'épaisseur des surfaces de soutien et d'appui est de l'ordre de quelques millimètres, préférentiellement comprise entre 0.5 mm et 5 mm, plus préférentiellement encore comprise entre 0.5 mm et 3 mm.

L'invention a également pour objet un module d'éclairage et/ou de signalisation comprenant un support avec un logement longitudinal et un guide de lumière longitudinal disposé dans le logement du support, **caractérisé en ce que** le support est conforme à l'invention et le guide est conforme à l'invention.

Selon un mode avantageux de l'invention, le module comprend un cache disposé en face du tronçon visible du guide, configuré de manière à cacher la nervure et formant une fenêtre au travers de laquelle des rayons sortant du guide peuvent se propager, la nervure s'étendant de manière continue sur essentiellement toute la longueur de la fenêtre.

Selon un mode avantageux de l'invention, le module comprend plusieurs fenêtres agencées de manière adjacente le long du guide de lumière, la nervure du guide s'étendant de manière continue essentiellement sur toute la longueur de chacune des fenêtres.

L'invention a également pour objet un dispositif d'éclairage et/ou de signalisation comprenant un module selon l'invention.

D'autres caractéristiques et avantages de la présente invention seront mieux compris à l'aide de la description et des dessins parmi lesquels :
- la figure 1 est une vue en coupe d'un dispositif d'éclairage ou de signalisation comprenant un module avec un guide de lumière et un support dudit guide qui sont conformes à l'invention ;
- la figure 2 est une vue en perspective d'un premier mode de réalisation d'un guide de lumière selon l'invention ;
- la figure 3 est une vue en perspective d'un deuxième mode de réalisation d'un guide de lumière selon l'invention ;
- la figure 4 est une vue de face d'une section de guide de lumière illustrant la correspondance selon la direction longitudinale entre la fenêtre d'un cache et la nervure ;
- la figure 5 est une vue en perspective du support du guide de lumière de la figure 1.

Les différents modes de réalisation illustrés aux figures sont volontairement simplifiés et schématiques à des fin de clarté d'exposé de l'invention. En pratique, les différents éléments constitutifs de l'invention pourront prendre des formes sensiblement plus complexes notamment en raison de différentes contraintes liées au dimensionnement.

Dans la description qui va suivre, les termes qualifiant la position de certains éléments, tels que « au-dessus », « en-dessous », « avant », « arrière », « devant », « derrière », « horizontal », « vertical », « supérieur », « inférieur », etc. se référent aux agencements spécifiques des figures. Ces termes ne sont cependant pas à être interprétés de manière stricte et absolue mais bien relative. En effet, les modules de signalisation qui y sont décrits peuvent être en pratiques orientés différemment sans s'éloigner aucunement de l'invention.

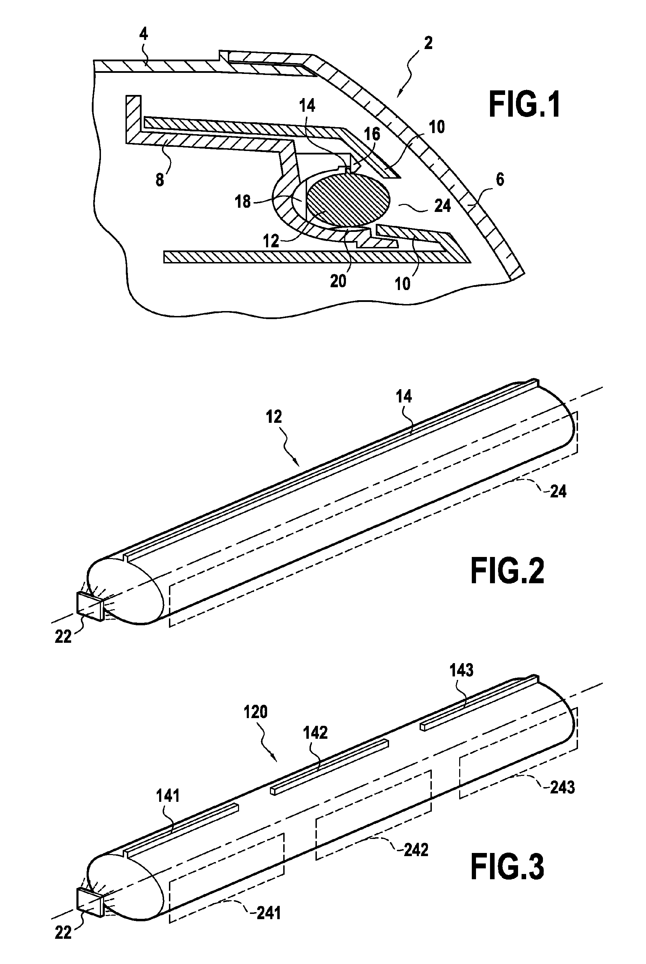

Une partie de dispositif d'éclairage ou de signalisation est illustrée en coupe à la figure 1. Cette partie comprend un module de signalisation conforme à l'invention. Plus précisément, le dispositif 2 comprenant un boîtier 4 et une glace 6 renferme un module de signalisation comprenant essentiellement un support 8, un guide de lumière 12 et un cache 10. Le guide de lumière 12 est un élément généralement allongé suivant une direction longitudinale. Cette dernière ne doit pas être rectiligne, au contraire, elle peut être curviligne. Le guide de lumière 12 présente une section dont le contour général est fermé. La section du guide est généralement constante. En fonction des applications, elle peut cependant varier quelque peu le long de la direction longitudinale du guide. Dans le cas précis de la figure 1 (et des figures 2, 3 et 4 qui vont être décrites ci-après), la section du guide est de forme ovale. Elle peut cependant prendre diverses formes à contour fermé telles que notamment elliptique, circulaire, rectangulaire ou carrée, voire encore plus complexe. Le guide de lumière 12 est constitué d'un matériau transparent tel que du polycarbonate. D'autres matériaux peuvent être utilisés, tels que par exemple du polymétacrylate de méthyle PMMA ou d'autres polymères transparents appropriés.

Le guide de lumière 12 est disposé dans un logement du support 8. Le logement comprend une surface de soutien 20 opposée à un crochet 16 de retenue coopérant avec une nervure 14 du guide 12. En effet, le guide 12 présente une nervure 14 s'étendant de manière généralement longitudinale le long de sa surface de manière à faire saillie depuis le contour général de sa section. Le logement du support 8 comprend également une surface d'appui disposée dans le fond du logement destinée à entrer en contact avec une zone arrière du guide.

Le cache 10 disposé devant le guide 12 est monté sur le support 8. Il est destiné à cacher le support ainsi que les zones de montage du guide sur le support. Il comprend par conséquent une fenêtre destinée à laisser passer les rayons lumineux émis par le guide vers la zone à éclairer ou illuminer.

Le guide de lumière est alimenté en rayons lumineux de manière classique depuis une de ses extrémités formant une face d'entrée. Il comprend de manière classique une série de facettes réfléchissantes le long de la zone arrière de sa surface, de manière à dévier selon une direction transversale dirigée vers la zone à éclairer ou illuminer des rayons le parcourant. Ces rayons déviés traversent la fenêtre du cache 10.

Un premier mode de réalisation du guide de lumière selon l'invention est illustré à la figure 2. Le guide 12 illustré est rectiligne pour des raisons de clarté d'exposé, étant entendu qu'il peut être curviligne. Une source lumineuse 22 comme par exemple du type diode à électroluminescence est illustrée en regard de la face d'entrée du guide 12. La nervure 14 s'étend sur toute la longueur utile du guide, cette longueur utile correspondant essentiellement au moins à la longueur de la fenêtre du cache, illustrée par le rectangle 24. En effet, l'objectif de la nervure étant de servir de zone d'accrochage du guide, il est important que cette dernière s'étende sur une majorité de la longueur de la zone visible du guide de manière à éviter de générer une inhomogénéité au niveau de l'aspect de ladite zone visible lorsque le guide est éclairé. De par la nature transparente même du matériau du guide et du phénomène de réflexions successives sur le dioptre formé par sa surface extérieure avec l'air ambiant, la nervure est susceptible de guider des rayons lumineux parcourant le guide, et potentiellement d'en faire sortir une partie suivant une direction transversale à la direction longitudinale du guide. De tels rayons sont récoltés par le cache de manière à ne pas être visibles depuis l'extérieur du dispositif d'éclairage ou de signalisation. Une interruption de la nervure est susceptible de générer une inhomogénéité au niveau de la partie visible du guide. Il est donc utile que celle-ci s'étende de manière continue sur une majorité de la longueur de la fenêtre 24 du cache.

Un deuxième mode de réalisation est illustré à la figure 3. Similairement à ce qui a été mentionné pour la figure 2, le guide 120 illustré est rectiligne pour des raisons de clarté d'exposé, étant entendu qu'il peut être curviligne. Une source lumineuse 22 comme par exemple du type diode à électroluminescence est illustrée en regard de la face d'entrée du guide. Le guide comprend une série de nervures continues 141, 142 et 143. Une fenêtre 241, 242 et 243 est disposée devant chacune des nervures 141, 142 et 143. Chacune de ces nervures s'étend sur au moins approximativement toute la longueur de la fenêtre correspondante pour les mêmes raisons que celles mentionnées ci-avant en relation avec la figure 2. Les différentes nervures 141, 142 et 143 sont préférentiellement alignées. Elles peuvent cependant présenter un certain décalage sans pour autant générer d'inhomogénéité.

De manière générale, la nervure présente une section généralement rectangulaire de manière à former une surface de contact apte à assurer la retenue du guide dans le logement du support. Les dimensions de la section de la nervure sont de l'ordre du millimètre. La hauteur de la nervure est typiquement de l'ordre d'1 mm. Elle peut cependant être comprise entre 0.5 mm et 3 mm. Il en est de même pour sa largeur.

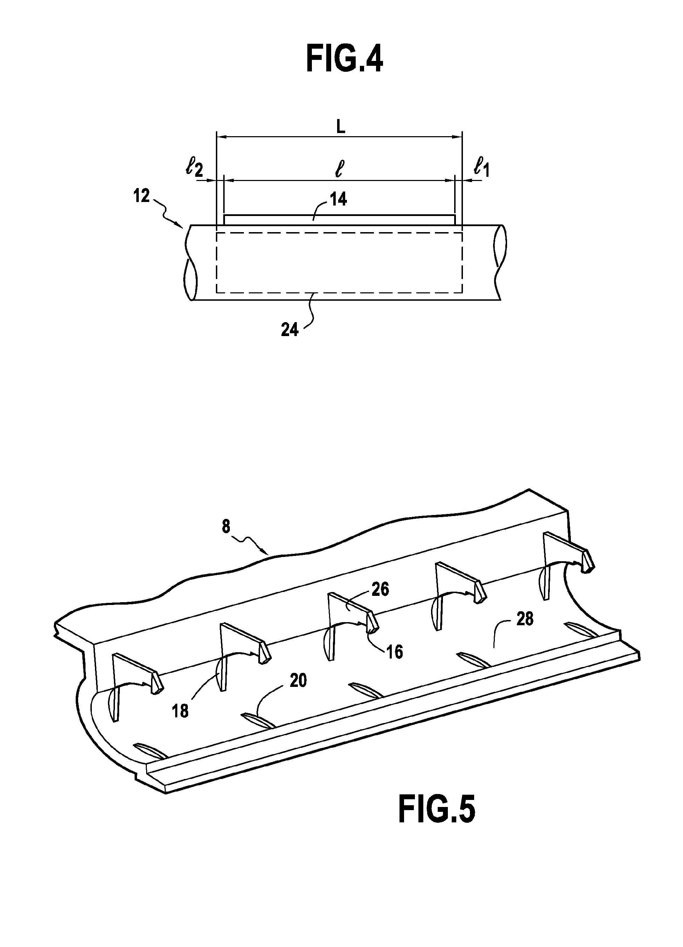

La figure 4 est une vue de face d'une portion de guide 12 et d'une fenêtre 24 définissant la zone visible de la portion de guide. On peut observer que la fenêtre 24 présente une longueur L et que la nervure continue 14 présente une longueur I. Préférentiellement et contrairement à l'illustration de la figure 4, la longueur I de la nervure est supérieure ou égale à la longueur L de la fenêtre et la nervure s'étend sur toute la longueur L de la fenêtre. En effet, de cette manière, les éventuelles inhomogénéités qui pourraient être générées par les interruptions de la nervure sont totalement cachées par le cache. En fonction, de la distance effective entre le cache et le guide de lumière et plus particulièrement la nervure, il peut être utile de prévoir un dépassement de la nervure par rapport au bord correspondant de la fenêtre afin de pallier tout problème d'inhomogénéité pour une observation du module selon une direction transversale par rapport à la direction principale d'éclairage ou d'illumination du module. Un tel débordement pourrait être de l'ordre de quelques millimètres.

En fonction de la taille et de la forme de la nervure, l'interruption de cette dernière peut avoir une influence très faible sur l'homogénéité de la partie visible du guide. L'inhomogénéité peut également n'être visible qu'à une certaine distance de l'interruption de la nervure. Dans ce cas, la longueur I de la nervure peut éventuellement être légèrement inférieure à la longueur L de la fenêtre comme cela est illustré à la figure 4. Les zones de la fenêtre correspondant à l'absence de nervure présentent de part et d'autre de la nervure des longueurs I₁ et I₂. Ces longueurs peuvent par conséquent être de l'ordre de quelques millimètres.

De manière générale, il est à noter que la ou les fenêtres formées par le ou les caches sont configurées pour présenter une hauteur légèrement inférieure à la hauteur du guide et incluse dans la hauteur dudit guide, de manière à bien masquer les zones de fixation du guide. Cette situation est bien visible à la figure 1 ainsi qu'à la figure 4. Les bords inférieurs et supérieurs de la ou des fenêtres sont par conséquent en retrait des bords supérieur et inférieur du guide. Ce retrait n'est pas obligatoire mais préférentiel. Il dépend bien sûr notamment de la taille du guide et est de l'ordre de quelques pourcents de la hauteur du guide. Préférentiellement il est compris entre 1% et 20% de la hauteur du guide, plus préférentiellement entre 1% et 15%, plus préférentiellement encore entre 3% et 10%.

Le support 8 du module de la figure 1 est illustré en perspective à la figure 5. On peut bien y observer le logement en forme générale de U destiné à recevoir le guide de lumière. Afin d'éviter des surfaces de contact trop grandes entre le guide de lumière et le logement, ce dernier comprend une série de surfaces de soutien 20 généralement horizontales et transversales réparties le long de sa direction longitudinale. Chacune de ces surfaces de soutien forme une arête sur la surface du logement. Préférentiellement, chacune de ces surfaces de soutien est disposée en regard d'un bras 26 et crochet 16 de retenue. Préférentiellement, chacune de ces surfaces de soutien présente une partie avant inclinée de manière à guider et faciliter l'insertion du guide dans son logement.

Des surfaces d'appui en forme de nervures 18 sont disposées le long du fond du logement afin de servir d'appui de la zone arrière du guide de lumière. L'exécution en forme de nervure permet de minimiser les surfaces de contact avec le guide tout en assurant une fixation très stable. Préférentiellement chacune de ces surfaces est alignée avec la surface de soutien 20 correspondante et/ou avec le bras flexible 26 et crochet 16 correspondant. L'épaisseur des surfaces de soutien 20 et d'appui 18 est de l'ordre de quelques millimètres, préférentiellement comprise entre 0.5 mm et 5 mm, plus préférentiellement encore comprise entre 0.5 mm et 3 mm.

Chaque bras 26 comprend un crochet 16 et une zone flexible apte à permettre un déplacement du crochet lors de l'insertion du guide dans son logement. Chaque crochet comprend une surface d'accrochage avec la nervure du guide de lumière, cette surface étant généralement perpendiculaire à la direction d'ouverture du logement qui correspond essentiellement à la direction d'insertion du guide dans ledit logement. Cette surface forme ainsi une surface à contact positif avec la surface avant de la nervure du guide. Chaque crochet comprend également une surface avant inclinée par rapport à la direction d'insertion du guide dans le logement, cette surface étant destinée à coopérer avec la surface supérieure de la nervure du guide. Cette surface avant du crochet est inclinée de manière à ce que l'effort d'insertion du guide selon la direction d'insertion génère une composante perpendiculaire dirigée de manière à s'éloigner du logement, cette composante permettant de fléchir le bras 26 et d'insérer plus avant le guide jusqu'à ce que la surface avant quitte la surface supérieure de la nervure et que la surface de contact vienne se placer devant la surface avant de la nervure, assurant ainsi une retenue du guide dans son logement.

Préférentiellement, les bras flexibles 26 et les crochets 16 exercent un effort sur le guide dirigé vers les surfaces de soutien. Cet effort élastique permet d'assurer un maintien optimal du guide dans son logement.

Il est à noter que les surfaces de contact positif avec la nervure peuvent prendre d'autres formes que celles illustrées aux figures 1 et 5. La présence de bras flexibles n'est pas obligatoire. A titre d'exemple, il est en effet envisageable de prévoir un ou plusieurs éléments mobiles supportant les surfaces de contact, ce ou ces éléments mobiles pouvant par exemple être verrouillés dans une position fermée où les surfaces de contact coopèrent par engagement avec la ou les nervures du guide.

Le support est préférentiellement réalisé en matière plastique moulée comme par exemple du polyoxyméthylène (ou polyformaldéhyde) qui est un polymère appelé également POM selon la norme ISO.

## Revendications

1. Guide optique de lumière (12 ; 120) avec une direction longitudinale et une section transversale formant un contour général fermé ;
le guide optique étant en matériau transparent apte à former un dioptre avec son environnement, et apte à transmettre et guider des rayons lumineux par réflexions multiples sur le dioptre ;
le guide optique comprenant au moins un tronçon visible avec des moyens aptes à réfléchir transversalement une partie des rayons le parcourant de manière à les faire sortir du guide ;
**caractérisé en ce que**
le guide optique (12 ; 120) comprend au moins une nervure longitudinale continue (14 ; 141, 142, 143) sur le tronçon visible du guide, faisant saillie du contour général, la nervure (14 ; 141, 142, 143) étant destinée à coopérer avec un support en vue de la fixation du guide optique au support.

2. Guide optique selon la revendication 1, **caractérisé en ce que** les moyens aptes à réfléchir transversalement une partie des rayons comprennent une succession de facettes réfléchissantes réparties longitudinalement sur une partie arrière de la surface du tronçon visible du guide optique, les rayons sortant du guide par une partie avant de ladite surface, la nervure (14 ; 141, 142, 143) étant positionnée sur le contour général du guide de manière à être entre la partie arrière et la partie visible.

3. Guide optique selon l'une des revendications 1 et 2, **caractérisé en ce que** la nervure (14 ; 141, 142, 143) présente une section générale de quadrilatère.

4. Guide optique selon l'une des revendications 1 à 3, **caractérisé en ce que** la nervure (14 ; 141, 142, 143) est formée intégralement avec le guide optique (12 ; 120).

5. Support (8) pour guide optique de lumière d'un dispositif d'éclairage et/ou de signalisation, comprenant un logement longitudinal apte à recevoir le guide optique (12 ; 120), **caractérisé en ce que** le guide optique (12 ; 120) est conforme à l'une des revendications 1 à 4 et le support comprend des moyens de retenue (16) du guide optique (12 ; 120) dans le logement apte à coopérer avec la nervure (14 ; 141, 142, 143) dudit guide.

6. Support (8) selon la revendication 5, **caractérisé en ce que** les moyens de retenue comprennent au moins une surface de contact positif (16) avec la nervure (14 ; 141, 142, 143) apte à retenir le guide optique (12 ; 120) dans le logement.

7. Support (8) selon la revendication 6, **caractérisé en ce que** les moyens de retenue comprennent au moins un bras (26) supportant la surface de contact positif (16).

8. Support (8) selon la revendication 7, **caractérisé en ce que** le au moins un bras (26) comprend une surface de contact avec la nervure (14 ; 141, 142, 143) du guide optique (12 ; 120) lors de son insertion dans le logement, ladite surface étant inclinée par rapport à une direction générale d'insertion du guide (12 ; 120) de manière à permettre le déplacement du bras (26) lors de l'insertion du guide dans le logement en vue de l'engagement de la surface à contact positif avec la nervure.

9. Support (8) selon l'une des revendications 7 ou 8, **caractérisé en ce que** le support comprend une série de bras (26) répartis le long de la direction longitudinale du logement.

10. Support (8) selon l'une des revendications 7 à 9, **caractérisé en ce que** le bras ou chaque bras (26) comprend un crochet (16) et une zone flexible apte à permettre un déplacement du crochet lors de l'insertion du guide (12 ; 120) dans son logement, chaque crochet comprenant une surface d'accrochage avec la nervure (14 ; 141, 142, 143) du guide de lumière

11. Support (8) selon l'une des revendications 5 à 10, **caractérisé en ce que** le logement comprend au moins une surface de soutien (20) du guide optique (12 ; 120), ladite surface de soutien (20) étant généralement opposée aux moyens de retenue (16) du guide optique (12 ; 120).

12. Support (8) selon la revendication 11, **caractérisé en ce que** la surface de soutien (20) du guide optique (12 ; 120) forme une arête orientée généralement perpendiculairement à la direction longitudinale du guide optique.

13. Support (8) selon l'une des revendications 5 à 12, **caractérisé en ce que** le logement comprend une section généralement en U dont l'ouverture correspond à une direction d'insertion du guide optique (12 ; 120) dans ledit logement.

14. Support (8) selon la revendication 13, **caractérisé en ce que** le logement comprend au moins une surface d'appui (18) du guide optique, ladite surface d'appui étant généralement disposée dans le fond du logement selon la direction d'insertion.

15. Support (8) selon la revendication 14, **caractérisé en ce que**, ladite surface forme une nervure dans un plan généralement perpendiculaire à la direction longitudinale du guide.

16. Module d'éclairage et/ou de signalisation comprenant un support (8) avec un logement longitudinal et un guide optique de lumière longitudinal (12 ; 120) disposé dans le logement du support, **caractérisé en ce que** le support (8) est conforme à l'une des revendications 5 à 15 et le guide optique (12 ; 120) est conforme à l'une des revendications 1 à 4.

17. Module d'éclairage et/ou de signalisation selon la revendication 16, **caractérisé en ce que** le module comprend un cache (10) disposé en face du tronçon visible du guide optique (12 ; 120), configuré de manière à cacher la nervure (14 ; 141, 142, 143) et formant une fenêtre (24 ; 241, 242, 243) au travers de laquelle des rayons sortant du guide optique (12 ; 120) peuvent se propager, la nervure (14 ; 141, 142, 143) s'étendant de manière continue sur essentiellement toute la longueur de la fenêtre (24 ; 241, 242, 243).
